# EUROPEAN PATENT APPLICATION

(11) **EP 0 608 798 A1**
(43) Date of publication of application: **03.08.1994**
(21) Application number: 94100952.4
(22) Date of filing: 24.01.1994
(51) Int. Cl.: F16L 21/04, F16L 25/00, F16J 15/32

(54) **A joint for the fluidtight connection of pipes**

(30) Priority: 25.01.1993 IT TO930041
(71) Applicant: SIGLIANO S.r.L., I-15020 Solonghello, Alessandria (IT)
(72) Inventor: Sigliano, Luigi, I-15033 Casale Monferrato (Alessandria) (IT)
(74) Representative: Marchitelli, Mauro

(57) **Abstract**

A joint for the connection of pipes, comprises a tubular sleeve (6), a pair of annular seals of elastomeric material (12) and a pair of clamping members (28), each of which can exert an axial clamping force on the respective seal. Each seal (12) has an annular groove (14) which receives pressure means (18) interposed between each clamping member (28) and the respective seal (12), such that - in use - the said pressure means (18) distribute the axial clamping force around the inner wall of the annular groove (14).

## Description

The present invention relates to a joint for the fluidtight connection of pipes, particularly, but not exclusively, for connecting together pipes of different diameters.

Joints have already been proposed which comprise a tubular sleeve with flared ends which can coaxially accommodate end portions of two aligned pipes to be connected to one another. These joints are provided with a pair of annular seals of elastomeric material, each of which is intended to be inserted with force between a flared end of the sleeve and the outer wall of a respective pipe. The annular seals are retained in position by a pair of clamping members which are movable parallel to the axis of the sleeve, and each of which exerts an axial clamping force on the respective seal, thus pressing the seal against the outer wall of the pipe and against the widened end of the sleeve.

In the solutions known until now, the clamping members press directly onto the seal, thus causing it to be inserted in the space formed between the outer cylindrical wall of the pipe and the inner wall of the widened end of the sleeve. The main disadvantage of this solution is that it requires the use of seals which have an inner diameter very similar to the diameter of the respective pipe. In fact, experience has shown that if seals are used which have an aperture larger than the outer diameter of the pipe, folds tend to form in the seal, thus affecting the fluidtightness of the seal.

Thus, the known solutions require the production of a wide range of seals with dimensions which correspond to those of the pipes commercially available. This is also a disadvantage for the user of the joint, who must obtain the seals suitable for the pipes to be connected.

In order to overcome the above-described disadvantages, the subject of the present invention is a fluidtight joint with the characteristics which constitute the subject matter of Claim 1.

According to the invention, the seal has an annular groove which accommodates pressure means interposed between the clamping member and the respective seal.

The said pressure means may be constituted by a plurality of separate pressure elements which are substantially non-deformable in relation to the seal and which are angularly spaced apart around the annular groove of the seal.

Alternatively, a pressure member can be provided which is in the form of a ring, preferably having a plurality of notches which confer on the pressure member a high level of circumferential flexibility.

Tests performed by the Applicant have shown that with only two series of pressure elements of different dimensions, or with two different pressure members which are in the form of rings and with two corresponding types of seals, joints can be formed between pipes, having a difference in diameter of up to 40 mm. By means of a single type of seal and a single type of pressure element, or a single type of ring pressure member, pipes with differences in diameter of up to 20 mm can be connected.

Further features and advantages of the invention will become apparent from the following detailed description, provided purely by way of non-limiting example, with reference to the appended drawings, in which:
- Figure 1 is an axial section of a joint according to the invention before fitting (on the right-hand side of the figure) and after fitting (on the left-hand side of the figure);
- Figure 2 is a perspective view of a seal used in a joint according to the invention;
- Figure 3 is an enlarged partial perspective view showing a detail of the seal of Figure 2;
- Figure 4 is a ring pressure member which can be used in a joint according to the invention; and
- Figures 5 and 6 are partial axial sections which correspond to Figure 1 and show two alternative embodiments of the joint according to the invention.

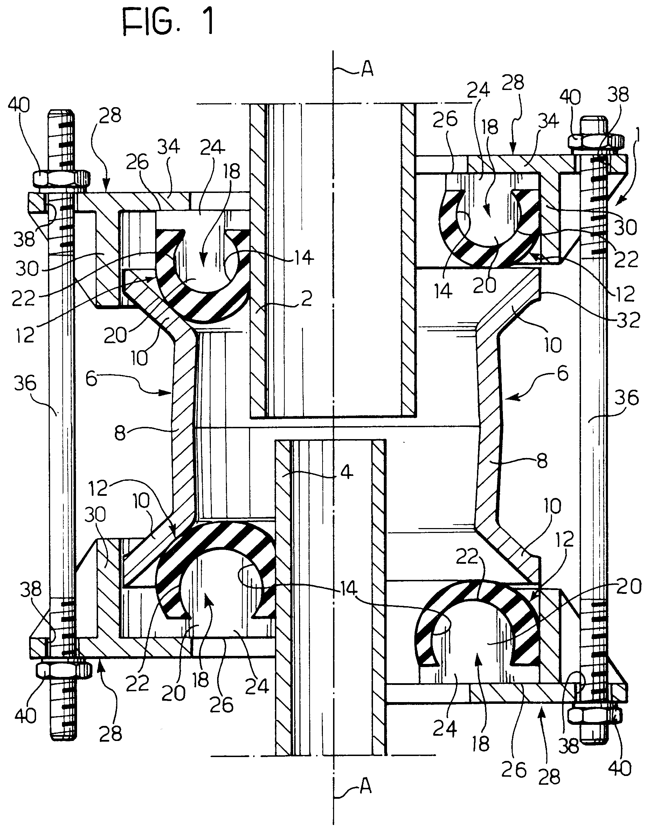

With reference to Figure 1, there is indicated a joint 1 for connecting together two pipes 2, 4 which, in the example shown in the figures, have different diameters, but which - in general - could also have the same diameter. The joint 1 comprises a tubular sleeve 6 which has a central cylindrical portion 8 and two flared ends 10. The cylindrical portion 8 of the tubular sleeve 6 has a diameter which is larger than the maximum diameter of the pipes which can be connected by means of the joint 1, and can thus accommodate coaxially the end portions of the two aligned pipes 2, 4 to be connected together.

An annular seal of elastomeric material, indicated 12, surrounds a respective pipe 2, 4 in use.

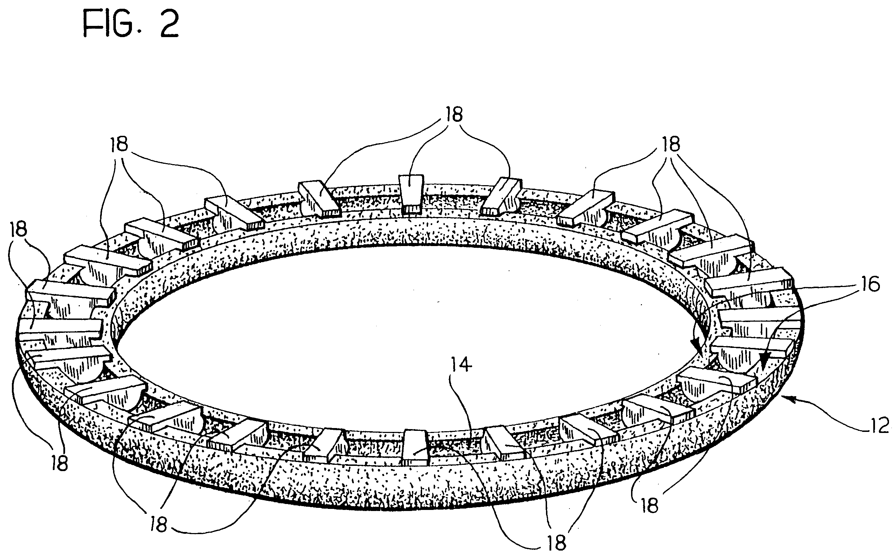

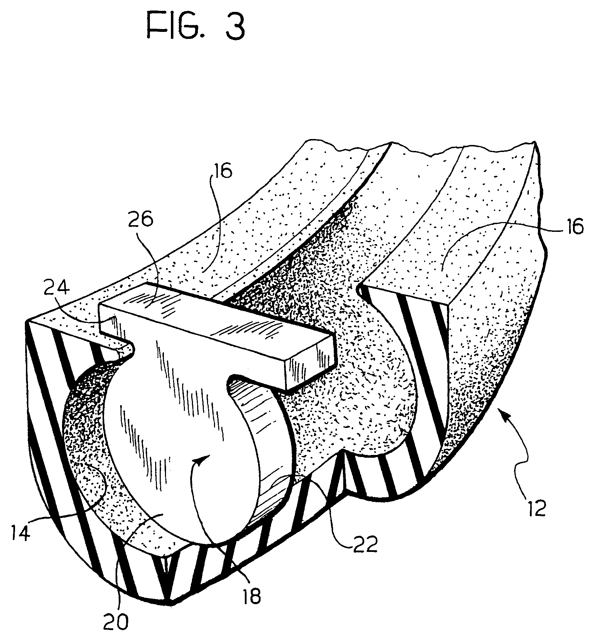

With particular reference to Figures 2 and 3, the seal 12 is provided with an annular groove 14 which has a semi-circular profile and opens onto a flat surface 16 of the seal 12. Inside the annular groove 12 there are inserted a plurality of pressure elements 18 which are spaced apart angularly around the circumference of the groove 14. The pressure elements 18 consist of resilient material which is substantially more rigid than the elastomeric material which constitutes the seal 12, such that in practice the elements 18 are non-deformable in relation to the seal 12. As can be seen in Figures 1 and 3 in particular, each pressure element 18 has a portion 20 with a circular profile and a surface 22 which establishes a form coupling with the groove 14 in the seal 12. Each pressure element 18 also has a prismatic portion 24 with a flat surface 26 which projects beyond the flat surface 16 of the seal 12.

With reference to Figure 1, a pair of clamping members, indicated 28, are movable towards one another along the axis A of the tubular sleeve 6, between the configuration shown in the right-hand part of Figure 1 and the configuration shown in the left-hand part of the same figure.

Each clamping member 28 has a cylindrical wall 30 which forms a seat inside which the seal 12 is accommodated. The wall 30 surrounds with slight clearance a cylindrical guide surface formed by an edge 32 of the flared end 10 of the tubular sleeve 6. Each clamping member 28 also has a circular plate 34 which bears against the flat surfaces 26 of the pressure elements 18. The two opposed clamping members 28 are connected to one another by means of a plurality of tie rods 36 with threaded ends, each of which engages a pair of aligned holes 38 in the two clamping members 28.

The tightening of nuts 40 which engage the threaded ends of the tie rods 36 generates an axial clamping force which is applied to the seal 12 through the pressure elements 18. This clamping force forces the seal 12 into the space formed between the flared end 10 of the tubular sleeve 6 and the outer wall of the pipe 2, 4. The pressure elements 18 distribute the clamping force around the inner surface of the annular groove 14, and this enables a firm sealing contact to be obtained between the seal 12 and the outer wall of the pipe 2, 4, even when there is a difference in diameter between the pipe 2, 4 and the internal aperture of the seal 12.

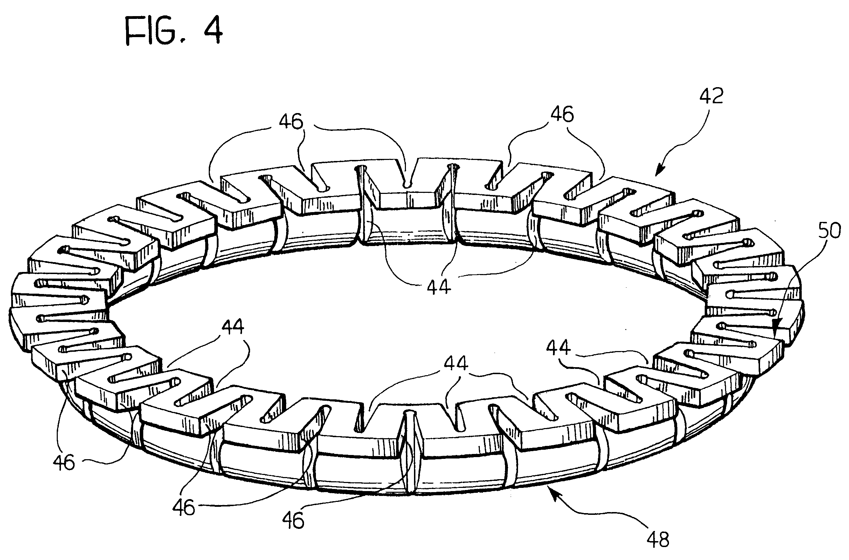

In Figure 4, a pressure member in the form of a ring, which can be used in the joint according to the invention in order to replace the series of pressure elements 18, is indicated 42. The pressure member 42 consists of a single piece of moulded plastics material, in which there is formed a plurality of V-shaped notches 44, 46, on both the inner part and the outer part thereof. The pressure member 42 has a root portion 48 having a cross-sectional profile which corresponds to that of the annular groove 14 of the seal 12. The root portion 48 is inserted in the groove 14 of the seal 12, such that its outer surface establishes a form coupling with the wall of the groove 14.

The notches 44, 46 confer on the pressure member a high level of circumferential flexibility, such that the portions of the pressure member 42 which are contained between two adjacent notches act as if they were independent elements. The radial flexibility of the pressure member 42 permits the reduction of the mean circumference of the member 42, when the member, together with the seal 12, is being inserted in the space between the flared end 10 of the tubular sleeve 6 and the outer wall of the pipe 2, 4. The pressure member 42 has a flat surface 50 which is intended to bear against the circular plate 34 of the respective clamping member 28.

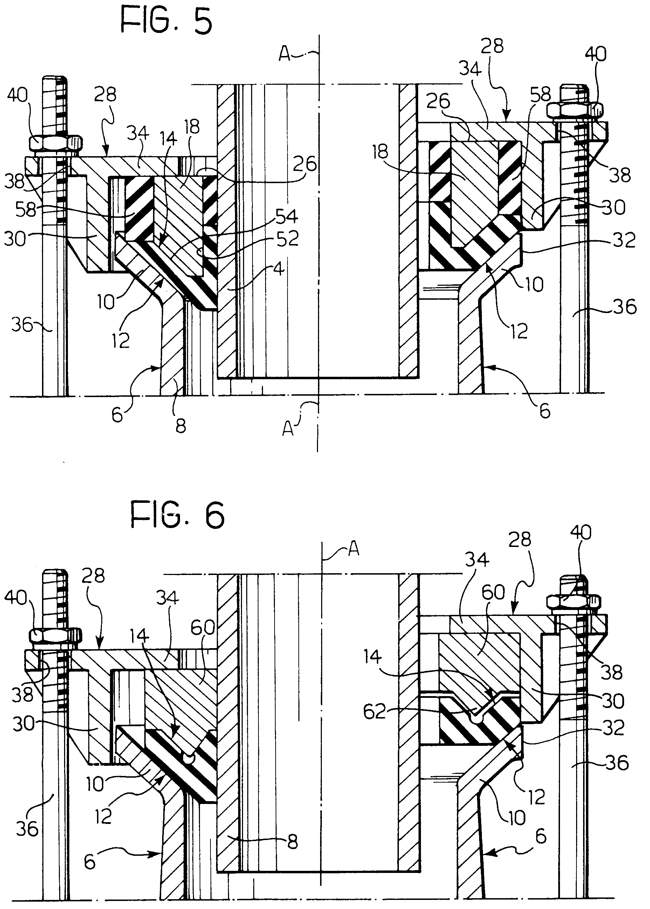

Figure 5 shows a first variant of the joint according to the invention. The elements which correspond to those previously described are indicated by the same reference numerals.

In the variant in Figure 5, the seal 12 has an annular wedge-shaped groove 14 which, in cross-section, has a wall 52 parallel to the axis of the pipe 4 and a wall 54 parallel to the flared end 10 of the tubular sleeve 6. The pressure elements 18 have in cross-section wedge-shaped profiles which establish a form coupling with the annular groove 14. The pressure elements 18 are inserted in angularly spaced apart apertures 56 in an auxiliary seal 58.

In the second variant shown in Figure 6, the seal 12 has an annular groove 14 with a V-shaped profile. A pressure member 60 consists of a ring provided with a V-shaped projection 62 which is inserted in the groove 14 of the seal 12.

## Claims

1. A joint for the fluidtight connection of pipes, comprising:
- a tubular sleeve (6) with flared ends (10) which can coaxially accommodate end portions of two pipes (2, 4) to be connected together;
- a pair of annular seals (12) of elastomeric material, each of which is intended to be inserted with force between a flared end (10) of the said sleeve (6) and the outer wall of a respective pipe (2, 4); and
- a pair of clamping members (28) which are movable parallel to the axis (A) of the sleeve (6), each of the said clamping members (28) being able to exert an axial clamping force on the respective seal (12) to press the seal (12) against the outer wall of the pipe (2, 4) and against the flared end (10) of the sleeve (6),
characterised in that each of the said seals (12) has an annular groove (14) which accommodates pressure means (18, 42, 60) which are interposed between each clamping member (28) and the respective seal (12) and which have a first surface (26) in direct contact with the clamping member (28) and a second surface in contact with the inner wall of the said groove (14), such that - in use - the said pressure means distribute the said axial clamping force around the inner wall of the said annular groove (14).

2. A joint according to Claim 1, characterised in that the second surface (22) of the said pressure means (18, 42, 60) establishes a form coupling with the annular groove (14).

3. A joint according to Claim 1, characterised in that the said pressure means comprise a plurality of pressure elements (18) which are substantially non-deformable in relation to the seal (12) and are angularly spaced apart around the annular groove (14).

4. A joint according to Claim 1, characterised in that the said pressure means comprise a pressure member (42, 60) which is in the form of a ring.

5. A joint according to Claim 4, characterised in that the pressure member is provided with a plurality of notches (44, 46) which confer on the pressure member (42) a high level of circumferential flexibility.

6. A joint according to Claim 2, characterised in that the second surface (22, 48) of the said pressure means (18, 42) has a circular profile.

7. A joint according to Claim 2, characterised in that the second surface of the said pressure means (18) has a wedge-shaped profile.

8. A joint according to Claim 2, characterised in that the second surface of the said pressure means (60) has a V-shaped profile.
